# EUROPÄISCHE PATENTANMELDUNG

(11) **EP 1 743 781 A2**
(43) Veröffentlichungstag der Anmeldung: **17.01.2007**
(21) Anmeldenummer: 06115515.6
(22) Anmeldetag: 15.06.2006
(51) Int. Cl.: B60C 23/04

(54) **Fahrzeugreifen mit integriertem Transponder zur Reifenidentifikation**

(30) Priorität: 15.07.2005 DE 102005033071
(71) Anmelder: Continental Aktiengesellschaft, 30165 Hannover (DE)
(72) Erfinder: Strache, Wolfgang, 30966, Hemmingen (DE)

(57) **Zusammenfassung**

Die Erfindung betrifft einen Fahrzeugreifen bestehend aus mehreren Reifenaufbauteilen und mit einem Transponder für eine Reifenidentifikation.

Um einen Fahrzeugreifen mit einem Transponder bereitzustellen bei dem der Transponder auf einfache Weise im Fahrzeugreifen integriert ist, wird vorgeschlagen, dass
die Antennenteile in Form von Antennenfäden (2, 3) durch einen textilen Einarbeitungsvorgang mit einem Reifenaufbauteil-Träger (4) verbunden sind.

## Beschreibung

Die Erfindung betrifft einen Fahrzeugreifen bestehend aus mehreren Reifenaufbauteilen und mit einem Transponder für eine Reifenidentifikation.

Transponder können im Reifen für verschiedene Aufgaben eingesetzt werden. Hierzu zählt insbesondere eine Reifenidentifikation mit der ein Automobilhersteller u. a. schnell sowie automatisiert feststellen kann, aus welchem Reifenwerk ein bestimmter Reifen geliefert wurde oder ob der gelieferte Reifen der gewünschten Dimension oder Spezifikation entspricht. Moderne Transponder bestehen aus einem Elektronikbauteil bzw. ―Chip, in dem Sensorelemente angeordnet sein können sowie aus einer an dieses Elektronikbauteil angeschlossenen Antenne.

Bislang werden Transponder nicht serienmäßig in Reifen eingebaut. Bei Prototypenversuchen werden die Transponder als zusätzliche Bauteile beim Reifenbau manuell zwischen die Reifenbauteile gelegt. Nachteilig ist dabei, dass hierfür ein zusätzlicher Arbeitsvorgang an der Reifenaufbaumaschine nötig ist und über die Taktzeitverlängerung die Fertigungskapazität der Baumaschine verringert wird. Die Antennen von so genannten UHF-Transpondern, die bei einer Frequenz von 869 bis 924 MHz betrieben werden, sind in der Regel als metallische Drähte ausgeführt und werden mit dem Chip in oder auf der Seitenwand appliziert. Ein weiterer Nachteil besteht darin, dass die Antennenteile als Fremdkörper für den Reifen wirken und bei einer entsprechenden Beanspruchung z.B. an der Verbindungsstelle zum Transponderchip abbrechen.

Der Erfindung liegt die Aufgabe zugrunde, einen Fahrzeugreifen mit einem Transponder bereitzustellen, bei dem der Transponder auf einfache Weise im Fahrzeugreifen integriert ist.

Gelöst wird die Aufgabe gemäß den kennzeichnenden Merkmalen von Anspruch 1 dadurch, dass die Antennenteile in Form von Antennenfäden durch einen textilen Einarbeitungsvorgang mit einem Reifenaufbauteil-Träger verbunden sind.

Ein Vorteil der Erfindung ist insbesondere darin zu sehen, dass durch den textilen Einarbeitungsvorgang der Transponder auf eine einfache Art und Weise fest mit dem Reifen verbunden wird. Ferner lässt sich dieser Einarbeitungsvorgang bei einem Verfahrensschritt vor dem Auflegen der Reifenaufbauteile auf die Reifenaufbaumaschine realisieren, wodurch die Fertigungskapazität der Reifenaufbaumaschine nicht beeinträchtigt wird.

In einer vorteilhaften Weiterbildung der Erfindung ist vorgesehen, dass die Antennenfäden einen Durchmesser kleiner oder gleich 0,7 mm, vorzugsweise kleiner oder gleich 0,1 mm, besitzen. Aufgrund des geringen Durchmessers der Antennenfäden, insb. wenn diese kleiner als 0,1 mm, sind diese hoch flexibel, weisen eine Dauerbiegewechselfestigkeit auf und lassen sich mit dem textilen Einarbeitungsvorgang leicht mit dem Reifenaufbauteilträger verbinden. Ein Durchmesser kleiner als 0,7 mm kommt in Betracht, wenn die Antennenfäden aus Festigkeitsträger-Cordfäden bestehen.

In einer weiteren vorteilhaften Weiterbildung der Erfindung ist vorgesehen, dass die Antennenfäden bei der Materialvorkonfektionierung der Reifenherstellung mit dem Reifenaufbauteil-Träger verbunden werden. Bei diesem Schritt der Reifenkonfektionierung lässt sich der textile Einarbeitungsvorgang der Antennenfäden einfach realisieren.

In einer weiteren vorteilhaften Weiterbildung der Erfindung ist vorgesehen, dass der textile Einarbeitungsvorgang durch ein Einweben, Einsticken, Einnähen oder Aufheften auf den vorkonfektionierten Reifenaufbauteil-Träger erfolgt. Diese Formen des textilen Einarbeitens lassen sich besonders vorteilhaft bei einem Reifenaufbauträgermaterial einsetzen.

In einer weiteren vorteilhaften Weiterbildung der Erfindung ist vorgesehen, dass der Reifenaufbauteil-Träger die Reifenkarkasse des Fahrzeugreifens ist. Die Reifenkarkasse eignet sich als Reifenaufbauträger, da auf diese Weise der Transponder an jeder beliebigen Stelle im Reifen angeordnet werden kann.

In einer weiteren vorteilhaften Weiterbildung der Erfindung ist vorgesehen, dass die Antennenfäden ein Elastizitätsmodul besitzen, welches kleiner oder im Wesentlichen gleich dem Elastizitätsmodul der Festigkeitsträger der Reifenkarkasse ist. Bei einer mechanischen Belastungen des umgebenden Reifenmaterials werden dadurch die Antennenfäden einer geringeren Beanspruchung ausgesetzt, wodurch eine hohe Lebensdauer der Transponder gewährleistet wird.

In einer weiteren vorteilhaften Weiterbildung der Erfindung ist vorgesehen, dass die elektrisch leitfähigen Antennenfäden als Kohlefaserfäden, Goldfäden, Edelstahlfäden, Silberfäden, metallisch beschichteten Textilfäden oder metallisch beschichteten Polymerfäden ausgeführt sind.
Diese Materialien besitzen den Vorteil, dass sie eine hohe elektrische Leitfähigkeit besitzen.

In einer weiteren vorteilhaften Weiterbildung der Erfindung ist vorgesehen, dass die Antennenfäden parallel zu den Festigkeitsträgern der Reifenkarkasse angeordnet sind.
Auf diese Weise sind die Antennenfäden bei einer entsprechenden Belastung des Reifens einer geringeren Beanspruchung ausgesetzt.

In einer weiteren vorteilhaften Weiterbildung der Erfindung ist vorgesehen, dass die Antennenfäden eine zickzackförmige, sinusförmige oder helixförmige Gestalt aufweisen. Diese nicht geradlinigen Antennenformen zeichnen sich dadurch aus, dass Dehnungen des umgebenden Materials nur zu geringen Dehnungen und damit geringen Kräften in der Antenne oder an der Kontaktstelle am Ende der Antenne führen. Insbesondere wenn die Transponderantennen nicht parallel zu den Festigkeitsträgern verlaufen, ist diese Weiterbildung vorteilhaft.

In einer weiteren vorteilhaften Weiterbildung der Erfindung ist vorgesehen, dass die Antennenfäden ein- oder mehrfaserig ausgeführt und die einzelnen Fasern miteinander verdrillt, verflochten, verwebt oder verknüpft sind.

Anhand mehrerer Ausführungsbeispiele soll die Erfindung näher erläutert werden. Es zeigen:
- Fig. 1:: Sechs Transponderausführungsbeispiele, die auf einem Reifenaufbauteilträger mit Festigkeitsträgern in einer Richtung angeordnet sind
- Fig. 2:: Vier Transponderausführungsbeispiele, die auf einem Reifenaufbauteilträger mit Festigkeitsträgern in zwei Richtungen angeordnet sind.

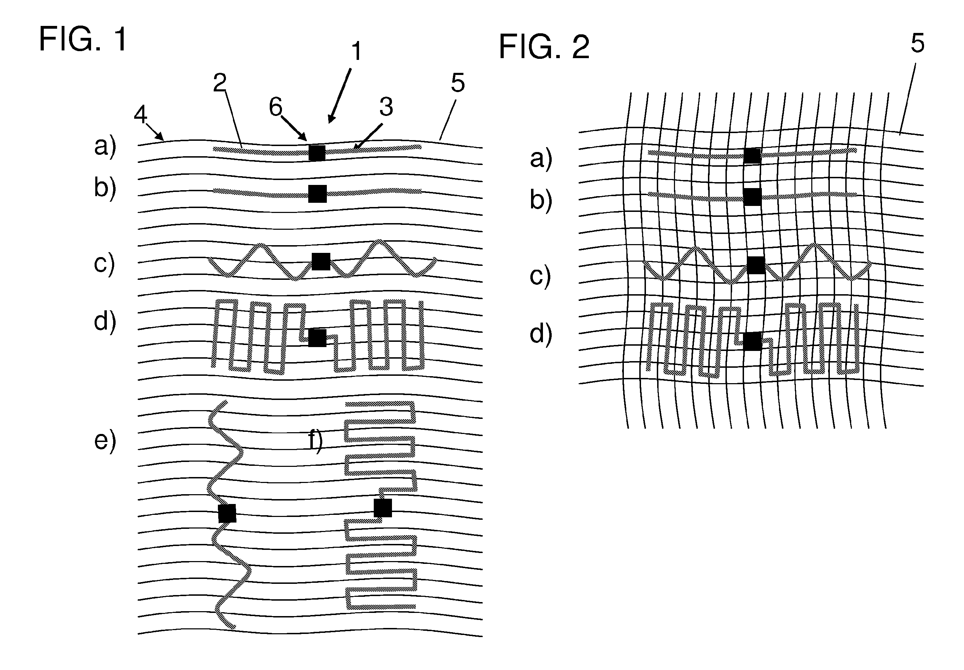

Figur 1 zeigt sechs Transponderausführungsbeispiele a ― f, die auf einem Reifenaufbauteilträger 4 mit Festigkeitsträgern 5 in einer Richtung angeordnet sind. Der Transponder 1 besitzt eine Dipolantenne, die sich aus zwei gegenüberliegenden Antennenteilen bzw. Antennenfäden 2 und 3 zusammensetzt. Die Antennenteile sind erfindungsgemäß als dünne Antennenfäden mit einem Durchmesser kleiner als 0,7 mm ausgeführt und über nicht dargestellte Kontakte mit dem Transponderchip, dem Transponderchipgehäuse oder der Transponderchipplatine 6 verbunden. Vorzugsweise besitzen die Antennenfäden einen Durchmesser kleiner als 0,1 mm, da diese dadurch flexibler sind und sich besser in den Reifenaufbauteilträger einarbeiten lassen. Der Transponderchip, das Transponderchipgehäuse oder die Transponderchipplatine 6 wird mit den Antennenfäden elektrisch leitfähig verbunden, z.B. gebondet, gekrimmt, gelötet, geschweißt oder geklebt. Als Reifenaufbauteilträger 4 wird vorzugsweise die Reifenkarkasse eingesetzt, in der parallel zueinander die dargestellten Festigkeitsträger 5 verlaufen. Die Antennenfäden 2 und 3 bestehen vorteilhafterweise aus Materalien, die ähnliche mechanische Eigenschaften aufweisen wie das Material in der Reifenseitenwand, insbesondere das Material der Reifenkarkasse. Eine bevorzugte Ausführungsform besteht aus elektrisch leitfähigen Antennenfäden, z.B. Kohlefaserfäden, Goldfäden, Silberfäden, Edelstahlfäden, metallisch beschichteten Textilfäden oder metallisch beschichteten Polymerfäden, die vor oder nach dem Kalandrieren in das Karkassmaterial der Reifenkarkasse über einen textilen Einarbeitungsvorgang oder durch einfaches Auflegen eingearbeitet werden. Als textiler Einarbeitungsvorgang ist ein Einweben, Einnähen, Einsticken oder Aufheften der Antennenfäden 2 und 3 auf die Reifenkarkasse denkbar. Die Antennenfäden 2 und 3 können auch aus mehreren Einzelfäden bestehen. Beim Einnähen der Antennenfäden 2 und 3 wird die Verbindung zur Reifenkarkasse z.B. über eine so genannte Verwebung von Unter- und Oberfaden realisiert. Die Antennenfäden 2 und 3 werden bei der Materialvorkonfektionierung auf der Reifenkarkasse angeordnet, wodurch die Taktzeit an der Reifenaufbaumaschine nicht reduziert wird.

Im Ausführungsbeispiel a) der Figur 1 ist der Transponder dergestalt angeordnet, dass die Antennenfäden 2 und 3 in der Aufsicht parallel zwischen den Festigkeitsträgern 5 verlaufen. Bei dem Ausführungsbeispiel b) ist der Transponder 1 so angeordnet, dass die Antennenfäden 2 und 3 und die Festigkeitsträger 5 im Wesentlichen übereinander liegen. Das Ausführungsbeispiel c) zeigt einen Transponder mit einer sinusförmigen Antennengestalt. Beim Ausführungsbeispiel d) besitzt der Transponder eine zickzackförmige Antennengestalt. Bei den Ausführungsbeispielen a und b verlaufen die Antennenfäden parallel zu den Festigkeitsträgern der Reifenkarkasse, da so die geringsten mechanischen Kräfte bei einer entsprechenden Beanspruchung auf die Antennenfäden 2 und 3 bzw. auf den Transponderchip 6 wirken. Die zickzackförmigen, rechteckförmigen und sinusförmigen Antennenformen gemäß Ausführungsbeispiel c) und d) besitzen den Vorteil, dass diese elastische Verformungen quer zu den Festigkeitsträgern 5 auf einem geringen Dehnungs- bzw. Spannungsniveau kompensieren können. Bei den Ausführungsbeispielen e) und f) verlaufen die Antennenfäden nicht parallel zu den Festigkeitsträgern, so daß geradlinige Antennenfäden durch quer zu den Festigkeitsträgern auftretende Verformungen und Kräfte stark belastet würden. Durch die sinus- oder helixförmige Antenne e) bzw. rechtwinklige Antenne f), bei denen Antennenstruktur bzw. ein Teil von ihr unter einem von 0° verschiedenen Winkel zur Dehnungsrichtung liegt, führen Dehnungen zu geringeren Spannungen in der Antennenstruktur.
Ferner sollte der Transponder 1 in definierten Abständen in das Karkassmaterial eingearbeitet werden, wobei bei den Abständen die jeweilige Länge des Karkassmaterials für einen Reifen maßgebend sein sollte.

Die Ausführungsbeispiele a) bis d) in den Figuren 2 unterscheiden sich von den Ausführungbeispielen in der Figur 1 dadurch, dass die Festigkeitsträger 5 in zwei sich kreuzenden Ausrichtungen angeordnet sind. Die Festigkeitsträger sind beispielsweise in Form von zwei gummierten Gewebelagen aufeinander gelegt oder miteinander verwebt.

### Bezugszeichenliste

### (ist Teil der Beschreibung)

- 1: Transponder
- 2: linke Antennenfäden bzw. Antennenteile der Dipolantenne
- 3: rechte Antennenfäden bzw. Antennenteile der Dipolantenne
- 4: Reifenaufbauteil-Träger
- 5: Festigkeitsträger
- 6: Transponder-Chip, Transponderchipgehäuse oder Transponderchipplatine

## Patentansprüche

1. Fahrzeugreifen bestehend aus mehreren Reifenaufbauteilen und mit einem Transponder
(1) für eine Reifenidentifikation, wobei der Transponder (1) einen Transponderchip, ein Transponderchipgehäuse oder eine Transponderchipplatine (6) und eine an den Transponderchip, das Transponderchipgehäuse oder die Transponderchipplatine angebundene Dipolantenne mit zwei elektrisch leitfähigen Antennenteilen aufweist,
**dadurch gekennzeichnet, dass**
die Antennenteile in Form von Antennenfäden (2, 3) durch einen textilen Einarbeitungsvorgang mit einem Reifenaufbauteil-Träger (4) verbunden sind.

2. Fahrzeugreifen nach Anspruch 1,
**dadurch gekennzeichnet, dass**
die Antennenfäden (2, 3) einen Durchmesser kleiner oder gleich 0,7 mm, vorzugsweise kleiner oder gleich 0,1 mm, besitzen.

3. Fahrzeugreifen nach einem der Ansprüche 1 oder 2,
**dadurch gekennzeichnet, dass**
die Antennenfäden (2, 3) bei der Materialvorkonfektionierung der Reifenherstellung mit dem Reifenaufbauteil-Träger (4) verbunden werden.

4. Fahrzeugreifen nach einem der Ansprüche 1 bis 3,
**dadurch gekennzeichnet, dass**
der textile Einarbeitungsvorgang durch eine Einweben, Einsticken, Einnähen oder Aufheften auf den vorkonfektionierten Reifenaufbauteil-Träger (4) erfolgt.

5. Fahrzeugreifen nach einem der Ansprüche 1 bis 3,
**dadurch gekennzeichnet, dass**
der Reifenaufbauteil-Träger (4) die Reifenkarkasse des Fahrzeugreifens ist.

6. Fahrzeugreifen nach einem der Ansprüche 1 bis 5,
**dadurch gekennzeichnet, dass**
die Antennenfäden (2, 3) ein Elastizitätsmodul besitzen, welches kleiner oder im Wesentlichen gleich dem Elastizitätsmodul der Festigkeitsträger der Reifenkarkasse ist.

7. Fahrzeugreifen nach einem der Ansprüche 1 bis 6,
**dadurch gekennzeichnet, dass**
die Antennenfäden (2, 3) als Kohlefaserfäden, Goldfäden, Silberfäden, Edelstahlfäden, metallisch beschichteten Textilfäden oder metallisch beschichteten Polymerfäden, ausgeführt sind.

8. Fahrzeugreifen nach einem der Ansprüche 1 bis 7,
**dadurch gekennzeichnet, dass**
die Antennenfäden parallel zu den Festigkeitsträgern (5) der Reifenkarkasse angeordnet sind.

9. Fahrzeugreifen nach einem der Ansprüche 1 bis 8,
**dadurch gekennzeichnet, dass**
die Antennenfäden eine zickzackförmige, rechteckförmige, sinusförmige oder helixförmige Gestalt aufweisen.

10. Fahrzeugreifen nach einem der Ansprüche 1 bis 9,
**dadurch gekennzeichnet, dass**
die Antennenfäden ein- oder mehrfaserig ausgeführt und die einzelnen Fasern miteinander verdrillt, verflochten, verwebt oder verknüpft sind.
